Europäisches Patentamt

(19) European Patent Office

Office européen des brevets

(11) Publication number : **0 439 284 A1**

(12) **EUROPEAN PATENT APPLICATION**

(21) Application number : 91300376.0

(22) Date of filing : 17.01.91

(51) Int. Cl.⁵ : **H02G 15/013, H02G 15/18, B29C 61/04**

(30) Priority : 18.01.90 GB 9001129
24.10.90 GB 9023184
24.10.90 GB 9023185

(43) Date of publication of application :
31.07.91 Bulletin 91/31

(84) Designated Contracting States :
AT BE CH DE DK ES FR GB GR IT LI LU NL SE

(71) Applicant : BRITISH TELECOMMUNICATIONS
public limited company
81 Newgate Street
London EC1A 7AJ (GB)

(72) Inventor : Miller, John Michael
31 Towers Road, Hatch End
Middlesex HA5 4SQ (GB)
Inventor : Radford, Alec David
492 Uxbridge Road
Pinner. Middlesex HA5 4SL (GB)
Inventor : Owens, Clive Peter
62 Heayfields
Welwyn Garden City, Herts AL7 2EH (GB)
Inventor : Skinner, Vincent Joseph
13 Cheston Avenue
Croydon CR0 8DE (GB)

(54) Cable closure.

㉗ A cable joint closure 10 includes a heat expandible inner closure member 14 which is disposed between a number of cables 11a-11c and an outer heat shrink closure member 27. Associated heat melt adhesive 18, 15 melts on heating the assembly so that the expanding inner member 14 and the shrinking closure member 27 together with the adhesive form a cable seal. The outer member 27 may be a band of material which surrounds and is sealed to an accessible body portion 25 on shrinking.

EP 0 439 284 A1

Fig. 1

## CABLE CLOSURE

The invention relates to a cable joint closure for telecommunications or other cables.

When cables are joined it is necessary to provide a closure which prevents ingress of water, mud or other undesirable products which may be in the environment where the joint has been made.

According to the invention there is provided a cable closure comprising :

at least one outer closure member ; at least one inner heat expandible closure member configured to allow at least one cable to be located between the inner and outer closure members ; and a heat meltable sealant therebetween, whereby cables when positioned between the inner and outer closure members are sealed therebetween on heating.

The at least one outer closure member is preferably heat shrinkable.

Further according to the invention there is provided a cable closure kit comprising an outer closure member, a heat expandible inner closure member for insertion within the outer member and configured to allow at least one cable to be located between the inner and outer closure members in use, and a meltable sealant.

The outer closure member is preferably heat shrinkable.

The invention will now be described by way of example with reference to the accompanying drawings in which :

Figure 1 shows one embodiment of the invention prior to a heating step ;

Figure 2 shows a detail of an embodiment of a sealant plug for use with the closure of Figure 1 ;

Figure 3 shows the Figure 1 closure after the heating step ;

Figure 4 shows an end view of the Figure 3 closure ;

Figure 5 shows alternative forms of the expanding inner cap ;

Figure 6 shows an alternative embodiment to that of Figure 1 ;

Figure 7 shows an alternative arrangement for the inner closure member formed with a number of channels therein ;

Figure 8 shows the closure with the Figure 7 arrangement prior to the heating step ;

Figure 9 shows the Figure 8 configuration after the heating step ;

Figure 10 shows a further embodiment of the inner closure member for insertion between two cables so as to seal and separate them ;

Figure 11 shows the closure with the Figure 10 arrangement prior to the heating step ;

Figure 12 shows the Figure 11 closure after the heating step ; and

Figure 13 shows a closure employing a number of inner closure members associated with pairs of cables.

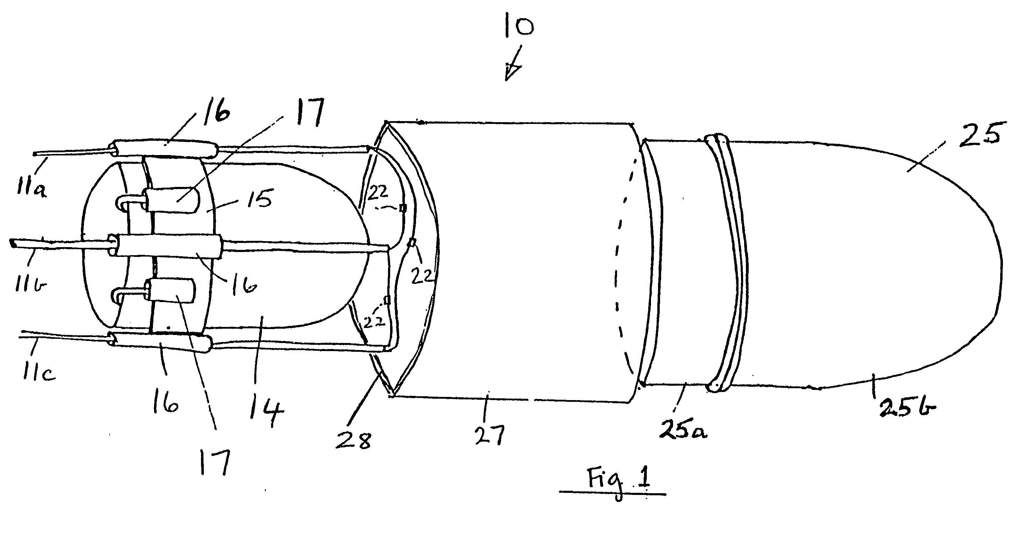

Figure 1 shows a joint closure configuration 10 prior to assembly and heating to effect the desired closure. The cables 11a - 11e are arranged around the periphery of a heat expandible inner closure member 14 (shown in this example as tubular cap with a domed end portion). Only cables 11a - 11c are shown in this Figure for the sake of clarity. A ring of heat meltable sealant 15 is provided on the cap 14, between the cables. In the area of the sealant, a cable wrap 16 is provided which may comprise a strip of metallic mesh, gauze or other heat absorbing/reflecting material to prevent damage to the cables during the heating step.

Between adjacent cables a number of sealant plugs 17 may be provided as shown to provide an additional source of sealant if necessary. The plugs as shown in Figure 2 may include a metal frame 18 with a leg 18a carrying a coating or plug of suitable heat meltable sealant 19. A hook portion 18b on the frame allows the sealant plug 17 to be held in close contact with the sealant ring during assembly. A heat concentrator 20 may be provided to assist in transfer of heat to the sealant during the heating step.

Returning to Figure 1, the various cables are interconnected as indicated by joint connectors 22.

The configuration thus far described is now ready to be placed in a base portion 25 which is typically of a compression moulded thermosetting plastic. The base or body as shown in this example is configured as a tubular portion 25a and a domed portion 25b. A clamp 30 (see Figure 3) would normally hold the two portions in intimate contact to provide a seal therebetween in combination with an O-ring seal.

The configuration in the base portion is sealed thereto by means of an outer closure member formed by a heat shrinkable band 27, which overlies portion 25a when assembled.

The heat shrinkable band 27 is typically manufactured from a cross linked polyolifin which has been originally artificially expanded while hot during manufacture and held in that state till it is cooled. The band will then be internally coated with the hot melt sealant 28.

The heat expandible cap 14 is also typically manufactured from a cross linked polyolifin. However during manufacture, it is converted from its original larger dimensions by forming it into smaller dimensions while hot and is then allowed to cool to retain this reduced shape.

During the heating step after assembly of the Figure 1 configuration, a gas torch or other suitable heater is applied and this will cause the expandible cap 14 to expand to follow more closely the cable position (see Figure 4) and the band 27 will shrink to conform to the shape of the end portion 25a and the cables (see Figure 3). At the same time the sealant on the band 27, the plugs 17 and the band 15 will melt and seal around the cables and between the band 27 and the cap 14 to provide a permanent and reliable seal on cooling (see Figure 4). The end portion 25a of the base 25 will not itself change its shape or character during this step.

If desired the heating can be carried out in two steps, the first step dealing with that portion of the band 27 adjacent the end portion 25a so that this shrinks down to provide a seal therewith whilst leaving the remaining band portion at its earlier diameter to receive the cables and heat expandible cap after this step. Thereafter a second heating step allows the remainder of the band 27 to shrink down and the cap 14 to expand to form the seal.

This second heating step preferably is carried out by heating the band 27 till it shrinks to loosely gather the cables and thereafter applying heat to the inside of the cap 14 and the outside of the band 27 simultaneously (or rapidly between the two) until the cap is full expanded and the band is full shrunk and the cables trapped and sealed therebetween.

The clamp 30 of Figure 3 includes a hinged portion 32 and a screw portion 33 to allow reopening and removal of the base portion 25b should a change in the connections therein be required, or for repair purposes.

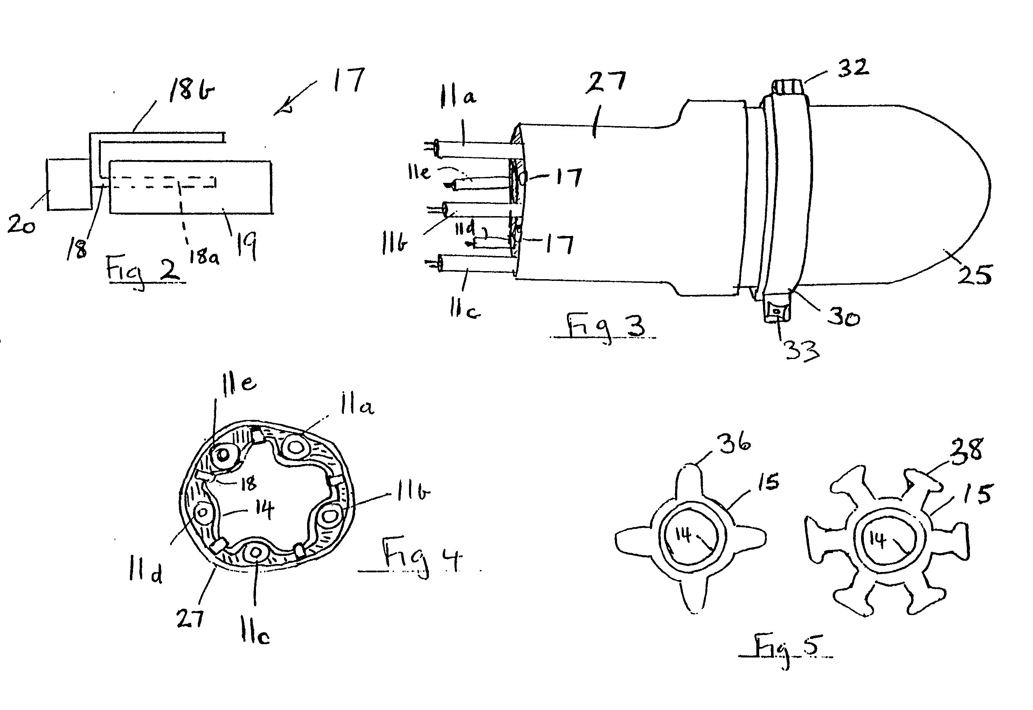

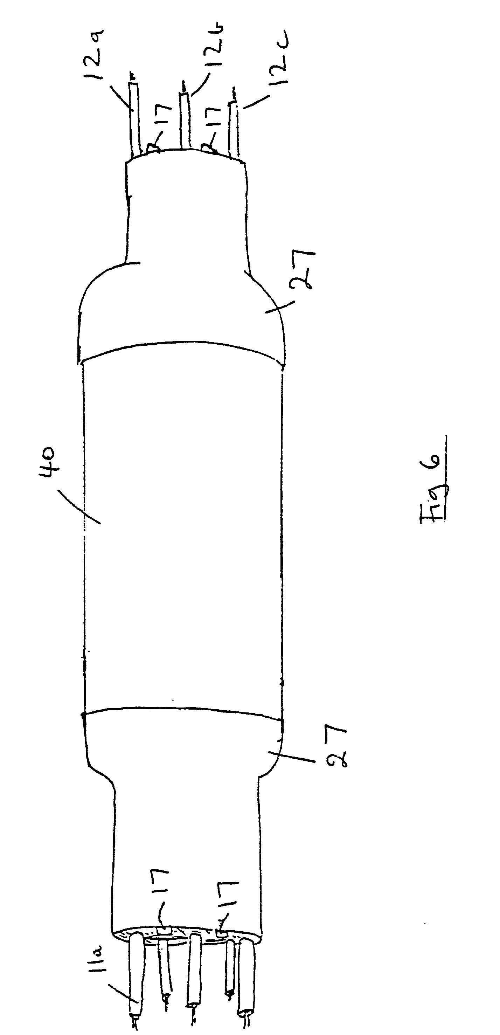

Although the cap 14 of Figure 1 has been described as being generally tubular, the cap could be formed with ribs typically in the sealant as shown in Figure 5. This assists in positioning and sealing the cables. The ribs 36 or 38 could be preformed on the sealant ring 15 if desired in configurations to suit cable numbers and placed on the expandible cap 14 prior to assembly. Ribs 38 are shown extending towards each other to aid the sealing of the cables when placed therebetween.

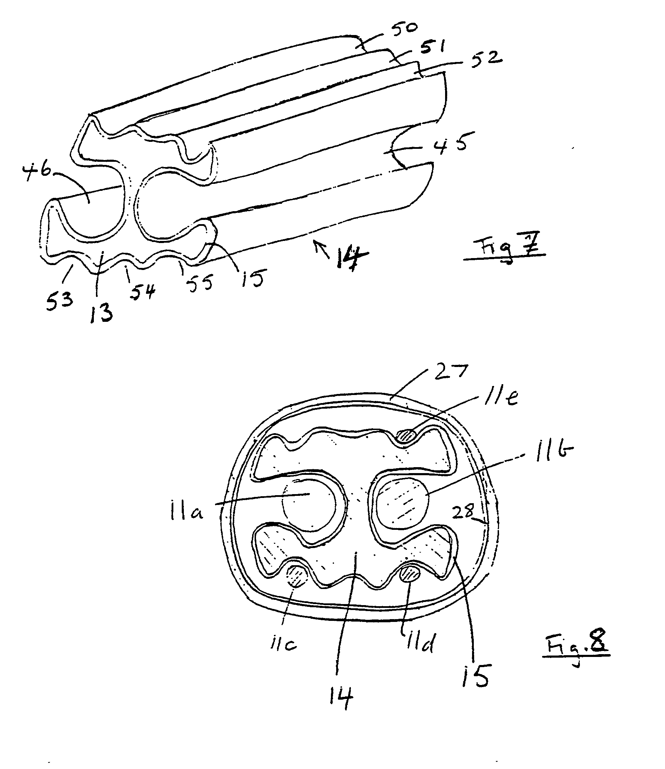

An alternative embodiment is shown in Figure 6. The sealing mechanism comprised of the heat expandible cap 14, the sealant ring 15, the cable wrap 16 and the sealant plugs 17 together with the heat shrinkable band 27 is provided at each end of an elongate, tubular central base 40. The base can be formed of a compression moulded thermosetting plastic material. This configuration allows cable interconnections in different configurations to be achieved as represented by the inclusion of further cables 12a-12c.

The assembly and heating steps can be identical to those described in relation to Figure 1, although they will be required twice to deal with both ends in this case.

If access is required to connections in this closure at some later date, sufficient cable slack would be provided inside the base 40 and the band 27 could be cut and around its periphery and on warming the end could be slid off. Reclosure could be achieved using a further band or a piece of wrap-around heat shrink material.

The sealant plugs 17 could alternatively have a T-shaped frame with the sealant on the leg as before. If the portion perpendicular to the leg is of thin material eg aluminium strip, this could form a strap around an adjacent cable to hold it in the correct position prior to heating.

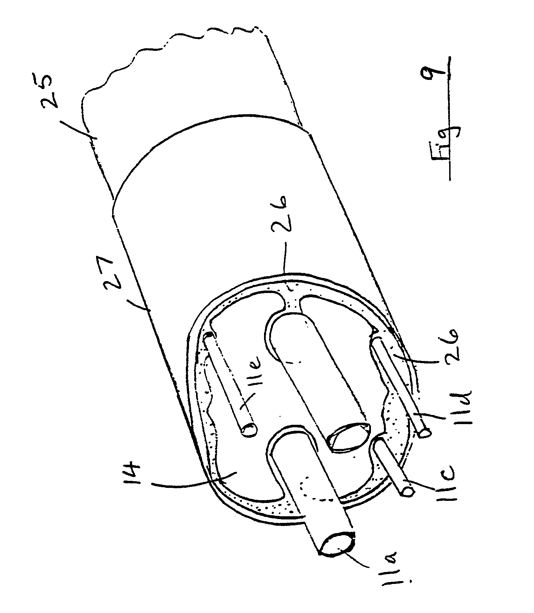

Figure 7 shows an alternative arrangement for the heat expandible inner closure member 14, which is preformed to assist in locating the cable for use in the joint closure configuration to provide a seal with the outer closure and between which the cables are located.

The closure member 14 for insertion comprises a heat expandible body portion 13 carrying a coating of heat meltable sealant 15. As shown the body is configured as an elongate member with two elongate major channels 45, 46 therein.

A number of smaller channels 50-55 are also provided. The major channels are designed to receive larger diameter cables than the channels 50-55. The body portion is manufactured typically from a cross linked polyolifin and preformed by forcing it to reduced dimensions whilst warm and allowing it to cool. On heating after receiving the cables it will expand to more closely surround the inserted cables and to assist in filling any void in the closure to effect sealing. As shown in this embodiment the insert is a generally H-shaped elongate configuration.

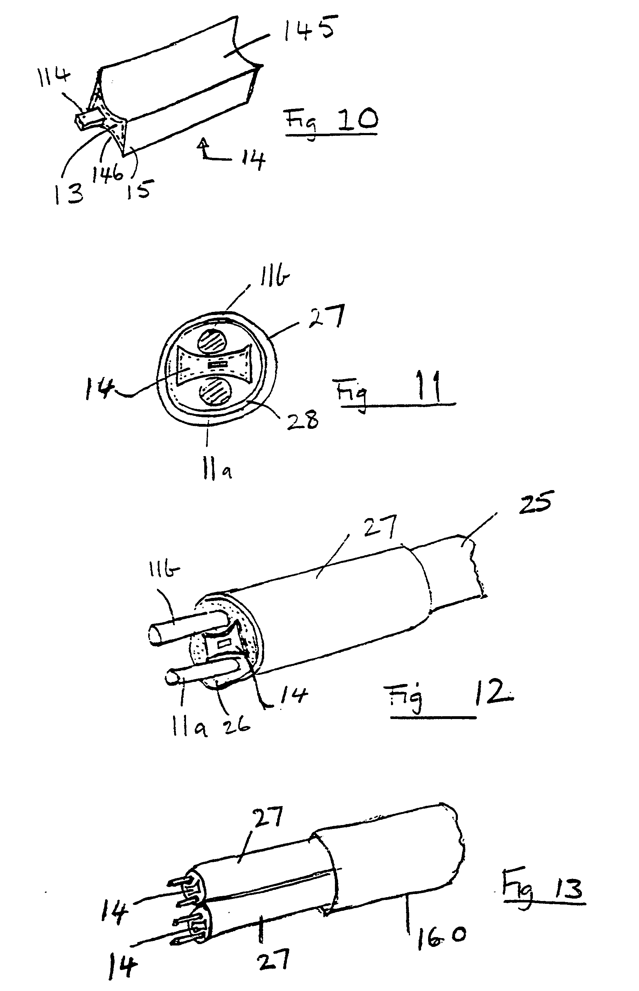

As seen from Figure 8 which shows the assembly before the heating step, the insert 14 is designed to locate within the outer heat shrinkable band 27 as before. The band is internally coated with hot melt adhesive 28.

As illustrated, a number of cables 11a-11e have been placed into position, with the larger cables 11a, 11b within the generally tubular channels 45, 46 and the remainder in the ribbed channels 52, 53 and 55. The other ribbed channels 51 and 54 are un-used in this example.

The heat shrinkable band 27 would again typically overlie a closure base or body 25 (see Figure 9) which is typically of a compression moulded thermosetting plastic. This could be tubular with a similar band and inserted inner member arrangement at the other end or could alternatively be provided with a domed closed portion. Electrical interconnection of the various cables would be effected within the closure base or body 25.

On heating the assembly, the member 14 expands and the band 27 contracts and the sealant melts as shown in Figure 9. A seal is provided by the band 27 against the closure base 25. The expanding insert 14 moves into closer contact with the cables 11a and 11b and the sealant surrounds them and effects a seal. As the whole of the insert expands, the ribbed channels on the outer periphery of the insert tend to move outwards and become less pronounced. This causes the cables 11c-11e to be pushed closer to the outer band 27 and the glue 15 and 28 amalgamates (as represented by area 26) to effect sealing. Even with the channels 50, 51 and 54 (not receiving cables), the expansion of the insert, the shrinking band 27 and the melted glue provide a seal on cooling, so that the requirement to provide a large number of inserts for handling different cable configurations is reduced.

In a further configuration, shown in Figure 10, the inner heat expanding closure member 14 to be inserted within the outer member is specifically configured to locate cables on either side thereof.

The inner closure insert 14 comprises a heat expandible body portion 13 carrying a coating of heat meltable sealant 15. As shown the body is configured as a generally rectangular elongate member, the major faces 145, 146 being concave, so as to define channels into which cables can be located.

The body portion of the insert is again manufactured typically from a cross linked polyolifin and preformed by forcing it to reduced dimensions whilst warm and allowing it to cool. On heating this will more closely contact inserted cables and will assist in filling any void in the closure to effect sealing.

As seen from Figure 11, the insert 14 is designed to locate within the outer heat shrinkable band 27. The band is internally coated with hot melt adhesive 28.

The inserted inner closure member 14 acts as a separator for the cables 11a, 11b as well as performing a sealing function described below. The body portion 13 includes a tab 114 extending therefrom which can be held to help with positioning of the insert between the cables. Typically, the insert can be warmed before positioning which causes the adhesive to become tacky (but without sufficient temperature to expand the insert). This allows the insert to be held at the correct position between the cables prior to the main heating step.

The heat shrinkable band 27 in this arrangement could form the closure itself and could be of a wrap around configuration, for example. Alternatively the heat shrinkable band 27 could overlie a closure base or body 25 (see Figure 12) which is typically of a compression moulded thermosetting plastic. This could be tubular with a similar band and insert arrangement at the other end or could alternatively be provided with a domed closed portion. Electrical interconnection of the various cables would be effected within the closure base or body 25.

More than one band 27 of heat shrinkable material could be provided at one end of the closure so as to split the cables into a number of pairs with their own insert as shown in Figure 13. A further band 160 of larger diameter heat shrink material is then provided to encompass a number of such cable pairs each with their own band 27 and inserted inner member 14.

Returning to Figure 12, on heating the assembly, the inserted separator and closure member 14 expands and the band 27 contracts and the sealant melts as shown in Figure 3. A seal is provided by the band 27 against the closure base 25. The expanding member 14 moves into closer contact with the cables 11a and 11b. As the whole of the member 14 expands, the channels on the faces 145, 146 of the insert tend to move outwards and also they become less concave. This causes the cables to be pushed closer to the outer band 27 and the sealant 15 and 28 amalgamates (as represented by area 26) to effect sealing.

The embodiments of the closure described would normally be supplied in kit form with instructions for use as necessary.

## Claims

1. A cable closure comprising : at least one outer closure member ; at least one inner heat expandible closure member configured to allow at least one cable to be located between the inner and outer closure members, and a heat meltable sealant therebetween, whereby cables when positioned between the inner and outer closure members are sealed therebetween on heating.

2. A closure as claimed in claim 1, wherein the outer closure member is formed from heat shrinkable material.

3. A closure as claimed in claim 1 and 2 wherein the sealant is carried by both the inner and outer closure members.

4. A closure as claimed in claim 1, 2 or 3 wherein the at least one outer heat shrinkable closure member co-operates with a body portion to effect a seal thereto.

5. A closure as claimed in claim 4 wherein the body portion includes access means for allowing access to the closure after sealing.

6. A closure as claimed in claim 4 or 5 wherein the body portion has a normally closed end portion.

7. A closure as claimed in claim 6 wherein the end portion is substantially dome shaped.

8. A closure as claimed in claim 4 wherein the body portion is elongate and an inner heat shrinkable closure member and an outer heat expandible closure member are each provided at each end thereof.

9. A closure as claimed in any preceding claim wherein the inner expandible closure member comprises a crosslinked polyolifin material previously preformed when hot into a configuration of reduced dimensions.

10. A closure as claimed in any preceding claim wherein the sealant is carried by a sealant carrier positioned between the inner and outer closure members, and configured to cooperate with the inner closure portion.

11. A closure as claimed in claim 10 wherein the sealant carrier includes a ring shaped portion.

12. A closure as claimed in claim 10 or 11 wherein the sealant carrier includes a number of ribs or the like extending longitudinally.

13. A closure as claimed in any preceding claim wherein at least one inner closure includes a closed end portion.

14. A closure as claimed in claim 13 wherein the inner closure end portion is substantially dome shaped.

15. A closure as claimed in any preceding claim including a sealant carrier formed with a plug of sealant for assisting in sealing, and located between the inner and outer closure members.

16. A closure as claimed in claim 15 wherein the carrier includes a metal frame with a heat concentrator thereon.

17. A closure as claimed in claim 15 or 16 wherein the carrier includes positioning means for co-operating with an adjacent cable or the inner closure member.

18. A closure as claimed in claim 17 wherein the positioning means includes a strap for co-operating with an adjacent cable.

19. A closure as claimed in any one of claims 1 to 8, wherein the inner closure member includes a portion preformed with a number of channels to receive cables, said channels including heat melt sealant therein to assist in sealing the cables within the closure on heating and expansion of the inner closure member.

20. A closure as claimed in claim 19, wherein the channels are of different sizes to accommodate different diameter cables.

21. A closure as claimed in claim 19 or 20, wherein the inner closure member is formed from a generally H-shaped body.

22. A closure as claimed in any one of claims 1 to 8, wherein the inner closure member is configured to fit between two cables to separate them.

23. A closure as claimed in any one of the claims 1 to 8 and 22, wherein the inner closure member comprises a heat expandable body member preformed with a pair of opposing concave faces each for receiving a cable and to provide separation therebetween, said faces including heat melt sealant thereon to assist in sealing of the cables with the closure on heating and expansion of the inner closure member.

24. A closure as claimed in claim 22 or 23, wherein the inner closure member includes holding means extending from the body to assist in manual location between the cables.

25. A closure as claimed in claim 24, wherein the holding means comprises a tab formed from heat expandible material.

26. A closure as claimed in any one of claims 22 to 25, wherein a plurality of inner and outer closure members are provided and a second heat shrink member is provided for surrounding the plurality of outer members to effect a seal therebetween on heating.

27. A method of forming a cable closure including the steps of providing at least one cable between inner and outer closure members of the type claimed in any preceding claim and heating the closure to expand the inner closure member and to melt the sealant therebetween.

28. A method as claimed in claim 19 wherein the heating step includes a first heating step effected by heating a portion of the outer closure member to cause this to shrink onto a body portion to provide a seal therewith and a second heating step to seal between the inner and outer closure members following the step of providing at least one cable between the inner and outer closure members.

29. A method as claimed in claim 27 or 28 including the step of heating the inner closure member so as to soften the adhesive attached thereto to assist in positioning the cables prior to the main heating step.

30. A cable closure kit comprising an outer closure member, a heat expandible inner closure member for insertion within the outer member and configured to allow at least one cable to be located between the inner and outer closure members in use, and a meltable sealant.

31. A kit as claimed in claim 30 wherein the outer closure member is heat shrinkable, and wherein the meltable sealant is carried on both the outer heat shrinkable closure member and the heat expandible inner closure member.

32. A kit as claimed in claim 30 or 31 including a body portion for use with the inner and outer closure members, said body portion being closed at one end and includes access means.

33. A kit as claimed in claim 30 or 31 including an elongate body portion and wherein two outer and inner closure members are provided for use therewith.

34. A kit as claimed in any one of claims 30 to 33 wherein the sealant is carried on a sealant carrier dimensioned to fit over the inner closure member, the sealant on the carrier including ribs or the like for at least partially surrounding the cable when located therein.

35. A kit as claimed in any one of claims 30 to 33, wherein the inner closure member includes a portion preformed with a number of channels to receive cables, said channels including heat melt sealant therein to assist in sealing the cables within the closure on heating and expansion of the inner closure member.

36. A kit as claimed in any one of claims 30 to 33, wherein the inner closure member is configured to fit between two cables to separate them.

37. A kit as claimed in any one of the claims 30 to 33 and 36, wherein the inner closure member comprises a heat expandible body member preformed with a pair of opposing concave faces each for receiving a cable and to provide separation therebetween, said faces including heat melt sealant thereon to assist in sealing of the cables with the closure on heating and expansion of the inner closure member.

38. A kit as claimed in claim 36 or 37, wherein the inner closure member includes holding means extending from the body to assist in manual location between the cables.

39. A kit as claimed in claim 36, 37 or 38, wherein a plurality of inner and outer closure members are provided and a second heat shrink member is provided for surrounding the plurality of outer members to effect a seal therebetween on heating.

Fig. 1

18b

17

18

20

18a

19

Fig 2

11a

11e

17

11d

17

11b

11c

27

32

25

30

33

Fig 3

11e

11a

18

14

11b

11d

11c

27

Fig 4

36

15

14

38

15

14

Fig 5

EP 0 439 284 A1

11a

10

17

17

40

27

12a

17

12b

17

12c

27

Fig 6

EP 0 439 284 A1

50
51
52
46
45
Fig 7
53 13 54 55 15
↗ 14

27
11e
11b
11a
28
11c 11d
15
Fig. 8
14

Fig. 9

Fig 10

Fig 11

Fig 12

Fig 13

**European Patent Office**

## EUROPEAN SEARCH REPORT

Application Number

EP    91 30 0376

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2019120 ( RAYCHEM )<br>* page 7, lines 31 - 98; figures 17, 18 * | 1, 2 | H02G15/013<br>H02G15/18<br>B29C61/04 |
| A |  | 4-6, 10, 31-33 |  |
| Y | US-A-3382121 (H.P. SHERLOCK)<br>* column 2, line 70 - column 3, line 22 * | 1, 2 |  |
| A | * column 3, lines 43 - 52; claims 1, 2; figures 1, 2 * | 9 |  |
| A | EP-A-0182199 ( SIGMAFORM )<br>* abstract; claims 1-25; figures 1-4 * | 1, 2, 22, 23, 30, 36 |  |
| A | EP-A-0160528 ( RAYCHEM )<br>* page 2, lines 17 - 31 *<br>* page 9, lines 16 - 19 *<br>* page 10, lines 11 - 14; claim 2; figure 2 * | 1, 9 |  |
| A | EP-A-0323914 ( RAYCHEM )<br>* page 4, lines 15 - 22 *<br>* page 4, lines 31 - -35; figures 1-3 * | 1, 2, 19, 31, 35, 36 | TECHNICAL FIELDS SEARCHED (Int. Cl.5 ) |
| A | US-A-3995964 (P. DE GROEF)<br>* abstract *<br>* column 3, lines 38 - 57 *<br>* column 4, lines 9 - 20; claims 12, 18; figures 1-7 * | 1, 2 | H02G<br>H01R<br>B29C |
| A | GB-A-2195840 (A.C. EGERTON)<br>* claims 1, 13; figures 1-12 * | 1, 2, 16 |  |

The present search report has been drawn up for all claims

| Place of search | Date of completion of the search | Examiner |
|---|---|---|
| THE HAGUE | 02 MAY 1991 | LOMMEL A. |

EPO FORM 1503 03.82 (P0401)